# EUROPEAN PATENT APPLICATION

(11) **EP 2 178 318 A1**
(43) Date of publication of application: **21.04.2010**
(21) Application number: 08800827.1
(22) Date of filing: 10.09.2008
(51) Int. Cl.: H04W 4/00

(54) **DEVICE AND METHOD FOR ROUTING SHORT MESSAGE AND SHORT MESSAGE PROCESSING SYSTEM**

(30) Priority: 14.09.2007 CN 200710152146
(71) Applicant: Huawei Technologies Co., Ltd., Shenzhen, Guangdong 518129 (CN)
(72) Inventor: LI, Xinjie, Guangdong 518129 (CN)
(74) Representative: Körber, Martin Hans
(86) International application number: PCT/CN2008/072315
(87) International publication number: WO 2009/036687

(57) **Abstract**

An SM routing device, comprising: a receiving unit configured to receive an SM sent by an SM sending terminal; a judging unit configured to query registration conditions of SM sending terminal and/or SM receiving terminal according to the pre-stored extended SMS registration information, and judge whether the SM sending terminal and/or SM receiving terminal registers an extended SMS; and a routing unit configured to, according to a result of judgment by the judging unit, send the SM not registering the extended SMS to the SMC, and send the SM having registered one or more extended SMSs to corresponding SM processing device for processing the extended SMS. The SM routing device can conveniently carry out a smooth update when extending the SMS.

## Description

This application is a continuation of International Application No. PCT/CN2008/072315, filed on September 10, 2008, which claims priority to Chinese Patent Application No. 200710152146.8, filed on September 14, 2007, both of which are hereby incorporated by reference in their entireties.

### Field of the Invention

The present invention relates to the field of communication, and particularly, to a device and method for routing short message and a short message processing system.

### Description of the Related Art

The short message service (SMS) has become an important supplementation to the communication network mainly for speech services. With the extensive development of the SMS in the communication network, the network operators provide abundant value-added services through the short message (SM) platform. Now the SMS has developed from the earliest basic SMS, which only supports point-to-point transmission of texts and digits, to the extended SMS, which extends services based on the basic SMS. Currently, the extended SMS includes an Enhanced Message Service (EMS) and a Multi-media Message Service (MMS). The EMS may be an extension of the function of SM, e.g., supporting functions such as point-to-multipoint transmission, SM signature, SM forwarding, SM duplicate, SM warehouse and SM filtering; the EMS may also be an extension of the protocol of SM, i.e., supporting transmission of simple image, sound and flash; or the EMS has extensions of both the function of SM and the protocol of SM. The MMS is an extension of the protocol of SM. The MMS may support transmission of simple image, sound and flash, as well as transmission of complex picture such as photo, large-scale diagram, music segment and video clip.

Presently, the transmission of SM is carried out through processing and forwarding by a Short Message Center (SMC). In a current SM processing system, the SMC receives an SM sent through a transmission network from a terminal, and judges whether the SM terminal had applied for an extended SMS (e.g., EMS or MMS), if the SM terminal had applied for an extended SMS, the SM is forwarded to an SM processing device that processes extended SMS at the back end for a processing, and then transmitted through the transmission network; and if the SM terminal had not applied for any extended SMS, the SM is transmitted through the transmission network.

However, during the implementation of the present invention, the inventor finds that in order to extend the SMS in the SM processing system of the conventional art, the newly developed SMS shall be provided to the network operator, the network operator adds a new SM processing device to the back end of an SMC of the current network; meanwhile, the network operator has to update the SMC of the current network and the SMS device simultaneously. The extension of the new function of the SMS is not a smooth update, and will affect the implementation of the existing SMS in the current network. In addition, with the continuous extension of the SMS, continuously updating the SMC will certainly cause the SMC components to be more and more complex, and the costs for updating and maintenance to be higher and higher; furthermore, the stability and reliability of the device will be poorer and poorer, and the risk of update failure also exists.

### Summary of the Invention

The embodiments of the present invention provide a device and method for routing SM and an SM processing system, so that the implementation of the current SMS will not be influenced when the SMS is extended in a network, and hence a smooth update can be conveniently carried out.

The embodiment of the present invention provides an SM routing device, including:
a receiving unit configured to receive an SM sent by an SM sending terminal;
a judging unit configured to judge at least one of: whether the SM sending terminal registers an extended SMS according to SMS registration information of the SM sending terminal, and whether an SM receiving terminal registers the extended SMS according to SMS registration information of the SM receiving terminal; and
a routing unit configured to, according to a result of judgment by the judging unit, send the SM of a basic SMS to an SMC and sending the SM of the extended SMS to corresponding SM processing device for processing the extended SMS.

The embodiment of the present invention provides an SM routing method, including:
receiving an SM sent by an SM sending terminal;
judging at least one of: whether the SM sending terminal registers an extended SMS according to SMS registration information of the SM sending terminal, and whether an SM receiving terminal registers the extended SMS according to SMS registration information of the SM receiving terminal;
sending the SM to an SMC, if the SM sending terminal and/or the SM receiving terminal does not register an extended SMS; and
sending the SM to corresponding SM processing device for processing the extended SMS, if the SM sending terminal and/or the SM receiving terminal registers one or more extended SMSs.

The embodiment of the present invention provides an SM processing system, including:
an SMC configured to process an SM in a basic SMS, and to send the processed SM to corresponding receiver;
at least one SM processing device configured to process an SM in an extended SMS, and to send the processed SM to corresponding receiver;
an SM routing device configured to receive an SM sent by a sender, query registration conditions of at least one of the SM sending terminal and the SM receiving terminal, judge at least one of: whether the SM sending terminal registers an extended SMS, and whether an SM receiving terminal registers the extended SMS; send the SM of the extended SMS not having been registered to the SMC, and send the SM of the extended SMS having been registered to corresponding SM processing device for processing the extended SMS.

In the embodiments of the present invention, the basic SMS and the extended SMS are separated from each other by adding an SM routing device. When new SMS need be extended, it is only required to overlap corresponding SM processing device onto the existing network directly, and to add a selection of SM processing path of the SMS in the SM routing device, without changing or updating the SMC, thus the implementation of the current SMS (e.g., the basic SMS processed by the SMC, and the extended SMS processed by the existing SM processing device) of the existing network will not be influenced. Therefore, the SMC components will be prevented from being more and more complex due to the continuous update of the SMC, the costs for updating and maintenance will be prevented from being higher and higher, the stability and reliability of the device will be prevented from being poorer and poorer, etc.

### Brief Description of the Drawings

Fig. 1 is a schematic structure diagram of an SM processing system connected to a transport network according to an embodiment of the present invention;
Fig. 2 is a schematic structure diagram of an SM routing device according to an embodiment of the present invention;
Fig. 3 is a flowchart of an SM routing method according to an embodiment of the present invention;
Fig. 4 is a flowchart of an SM routing method according to an embodiment of the present invention;
Fig. 5 is a flowchart of an SM routing method according to an embodiment of the present invention;
Fig. 6 is a flowchart of an SM routing method according to an embodiment of the present invention;
Fig. 7 is a flowchart of an SM routing method according to an embodiment of the present invention;
Fig. 8 is a schematic structure diagram of an SM processing system connected to a transport network according to an embodiment of the present invention.

### Detailed Description of the Preferred Embodiments

The embodiments of the present invention add an SM routing device between a terminal and an SMC as well as between the terminal and an SM processing device, and the SM routing device selects corresponding processing path for the SM according to the SMS registered by the SM sending terminal and/or the SM receiving terminal, so as to process the basic SMS and the extended SMS separately. The technical solutions of the present invention are detailedly described as follows in conjunction with the drawings and embodiments.

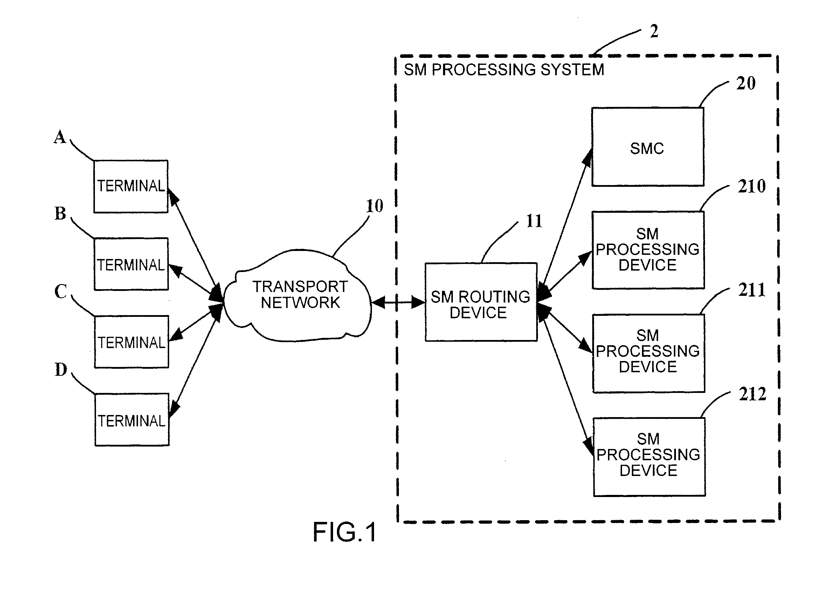

Fig. 1 is a structural diagram of an SM routing device connected between a terminal and an SMC as well as between the terminal and an SM processing device according to an embodiment of the present invention, wherein the SMC center 20 is used to process the basic SMS that supports the transmission and reception of text and digital SM; the SM processing device is used to process the extended SMS such as EMS and MMS; the EMS can support functions such as point-to-multipoint transmission, SM signature, SM forwarding, SM duplicate, SM warehouse and SM filtering, and also can support transmission of simple image, sound and flash; the MMS not only supports transmission and reception of text, digit, simple image, sound and flash, but also supports transmission and reception of complex picture such as photo, large-scale diagram, music segment and video clip; the number of the SM processing device may be one or more, which can be increased or decreased based upon the category and the amount of the extended services. The embodiment illustrated in Fig. 1 includes three SM processing devices, wherein an SM processing device 210 is configured to process the a EMS of category I, and the EMS of category I supports functions such as point-to-multipoint transmission, SM signature, SM forwarding, SM duplicate, SM warehouse and SM filtering; an SM processing device 211 is configured to process a EMS of category II, and the EMS of category II supports transmission of simple image, sound and flash; and an SM processing device 212 is configured to process the MMS. The SM routing device 11 is configured to receive an SM sent by a sender, judge whether SM sending terminal and/or the SM receiving terminal registers an extended SMS, and send the SM to the SMC 20, if the SM sending terminal and/or the SM receiving terminal does not register an extended SMS; or send the SM to corresponding SM processing device for processing the extended SMS, if the SM sending terminal and/or the SM receiving terminal registers one or more extended SMSs.

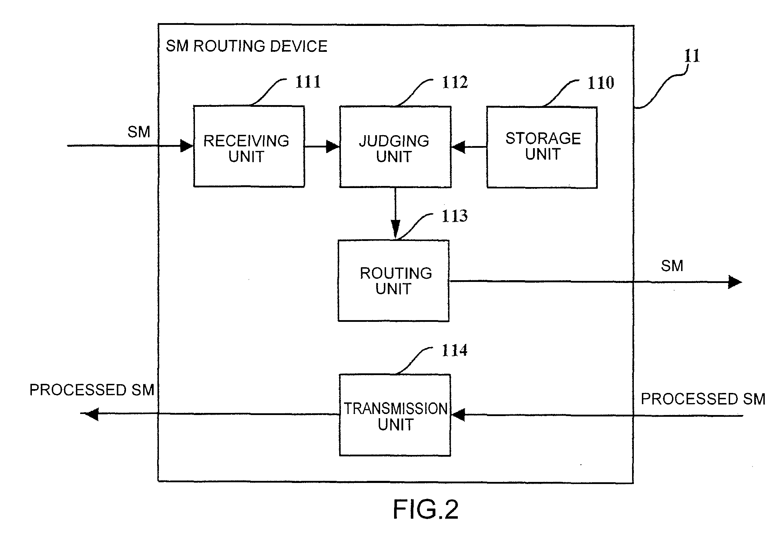

Fig. 2 is a schematic structure diagram of an SM routing device. The SM routing device 11 includes a storage unit 110, a receiving unit 111, a judging unit 112, a routing unit 113 and a transmission unit 114.

The storage unit 110 is configured to store extended SMS registration information of the terminal. The storage may adopt a form of table or array, and the following table is taken as an example, as shown in Table 1:

**Table 1**

| Terminal | Registered Extended SMS |
|---|---|
| B | EMS of Category I, EMS of Category II |
| C | EMS of Category I |
| D | EMS of Category II, MMS |

In Table 1, the terminal B registers EMS of Category I and EMS of Category II, the terminal C registers EMS of Category I, the terminal D registers EMS of Category II and MMS, and terminals not registering the extended SMS may need not to be recorded. Of course, the storage units 110 may be arranged at respective SM processing devices, and the SM processing devices store corresponding extended SMS registration information, e.g., the SM processing device processing the EMS stores registration information of the EMS.

The receiving unit 111 is configured to receive the SM sent by the terminal of the sender. The receiving unit 111 is a communication interface between the SM routing device and the terminal of the sender, and is responsible for communications with the terminal of the sender. The terminal of the sender may be a mobile communication terminal such as mobile phone and Personal Digital Assistant (PDA), or a fixed terminal such as fixed phone and computer.

The judging unit 112 is configured to query registration conditions of the SM sending terminal and/or the SM receiving terminal according to the pre-stored extended SMS registration information, and judge whether the SM sending terminal and/or the SM receiving terminal registers an extended SMS. The judging unit 112 may merely judge whether the SM sending terminal registers an extended SMS, or merely judge whether the SM receiving terminal registers an extended SMS, or simultaneously judge whether SM sending terminal and the SM receiving terminal register an extended SMS. The judging unit 112 may judge whether the SM sending terminal and/or the SM receiving terminal registers an extended SMS by querying the extended SMS registration information stored in the storage unit 110, or directly querying the extended SMS registration information stored in the SM processing device, thus the storage unit 110 may be omitted, and the memory space of the SM routing device 11 can be saved. For example, referring to Fig. 2A, the registered terminals of the EMS of Category I stored in the SM processing device 210 include terminals B and C, the registered terminals of the EMS of Category II stored in the SM processing device 211 include terminals B and D, the registered terminal of the MMS stored in the SM processing device 212 includes terminal D, and the SM routing device 11 determines whether the terminal of the SM registers the EMS of Category I, the EMS of Category II or the MMS by querying the registered terminals of the EMS of Category I, the EMS of Category II and the MMS of the SM processing devices 210, 211 and 212.

The routing unit 113 is configured to, according to the result of judgment by the judging unit 112, send the SM of the extended SMS not having been registered to the SMC 20, and send the SM of one or more extended SMSs having been registered to corresponding SM processing device for processing the extended SMS.

The routing unit 113 may send the SM according to the registration conditions of the SM sending terminal and the SM receiving terminal: send the SM to the SMC 20, if the SM sending terminal and the SM receiving terminal do not register an extended SMS; and send the SM to corresponding SM processing devices 210, 211 and 212 for processing the extended SMS respectively registered, if the SM sending terminal and the SM receiving terminal respectively register one or more extended SMSs; or send the SM to corresponding SM processing devices 210, 211 and 212 for processing the extended SMS commonly registered, if the SM sending terminal and the SM receiving terminal commonly register one or more extended SMSs.

The routing unit 113 may also send the SM only according to the registration condition of the SM sending terminal: send the SM to the SMC 20, if the SM sending terminal does not register an extended SMS; and send the SM to corresponding SM processing devices 210, 211 and 212 for processing the extended SMS, if the SM sending terminal registers one or more extended SMSs.

The routing unit 113 may also send the SM only according to the registration condition of the SM receiving terminal: send the SM to the SMC 20, if the SM receiving terminal does not register an extended SMS; and send the SM to corresponding SM processing devices 210, 211 and 212 for processing the extended SMS, if the SM receiving terminal registers one or more extended SMSs.

In the embodiment of the present invention, the SM routing device 11 may further include: a transmission unit 114 for transmitting the SM processed by the SMC 20 or the SM processing devices 210, 211 and 212 to corresponding receiver. To be noted, the SM routing device 11 may not include the transmission unit 114 too, thus the processed SM does not need to pass the SM routing device 11, while the SMC 20 or the SM processing devices 210, 211 and 212 directly send the processed SM to corresponding receiver.

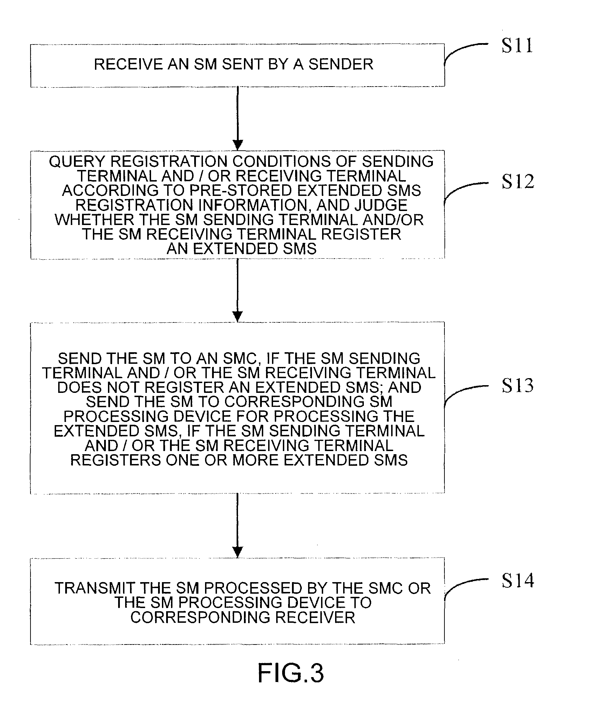

Fig. 3 is a flowchart of an SM routing method according to an embodiment of the present invention, as shown in Fig. 3:
Step S11: receiving an SM sent by a sender;
Step S12: querying registration conditions of SM sending terminal and/or the SM receiving terminal according to pre-stored extended SMS registration information, and judging whether the SM sending terminal and/or the SM receiving terminal registers an extended SMS. The extended SMS registration information may be pre-stored in an SM routing device, or pre-stored in an SM processing device and acquired by the SM routing device therefrom through a query.
Step S13: sending the SM to an SMC, if the SM sending terminal and/or the SM receiving terminal does not register an extended SMS; and sending the SM to corresponding SM processing device for processing the extended SMS, if the SM sending terminal and/or the SM receiving terminal registers one or more extended SMSs.

In the embodiment of the present invention, step S14 may be further included: transmitting the SM processed by the SMC or the SM processing device to corresponding receiver. The SMC or the SM processing device may transmit the processed SM to corresponding receiver through the SM routing device, or directly transmit the processed SM to corresponding receiver.

Step S12 and step S13 may just judge whether the terminal of the sender of the SM registers an extended SMS, and send the SM according to the registration condition of the terminal of the sender; or just judge whether the terminal of the receiver of the SM registers an extended SMS, and send the SM according to the registration condition of the terminal of the receiver; of course, the above steps can also simultaneously judge whether SM sending terminal and/or the SM receiving terminal register an extended SMS. When SM sending terminal and/or the SM receiving terminal registers multiple extended SMS, the SM will be respectively sent to corresponding SM processing devices for processing the respective extended SMS.

The detailed flow of the SM routing method is described as follows in conjunction with the drawings and examples.

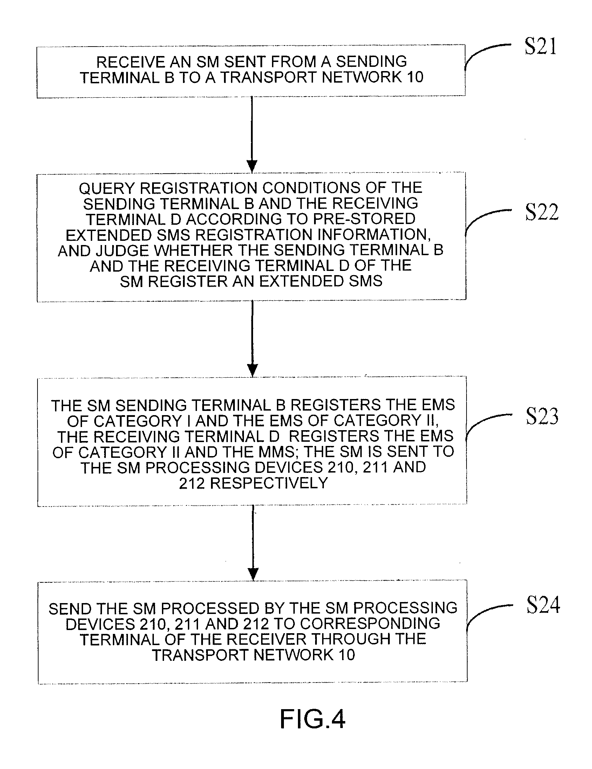

Fig. 4 is a flowchart of an SM routing method according to embodiment of the present invention. In this embodiment, a transport network 10 receives an SM sent from a terminal B to a terminal D, thus the SM sending terminal is the terminal B, and the SM receiving terminal is the terminal D. The SMC 20 is used to process the SMS, an SM processing device 210 is used to process the the EMS of Category I provided by a service provider I, an SM processing device 211 is used to process the the EMS of Category II provided by a service provider II, and an SM processing device 212 is used to process the the MMS provided by the service provider I. The extended SMS registration information of the terminals A, B, C and D are stored in the manner as shown in Table 1. The terminal A does not register an extended SMS, the terminal B registers the EMS of Category I and the EMS of Category II, the terminal C registers the EMS of Category I, and the terminal D registers the EMS of Category II and the MMS.

The embodiment judges whether the SM sending terminal and/or the SM receiving terminal register an extended SMS, and sends the SM according to the extended SMS respectively registered by the SM sending terminal and the SM receiving terminal.

Step S21: receiving an SM sent from a terminal B to a transport network 10.

Step S22: querying registration conditions of the terminal B and the terminal D according to pre-stored extended SMS registration information, and judging whether the terminal B and the terminal D register an extended SMS. In the embodiment, it can be seen that, by querying the extended SMS registration information of the terminals in Table 1, the terminal B registers the extended SMS, i.e., the EMS of Category I and the EMS of Category II, and the terminal D registers the extended SMS, i.e., the EMS of Category II and the MMS.

Step S23:, The terminal B registers the EMS of Category I and the EMS of Category II, and the terminal D registers the EMS of Category II and the MMS, and then the SM is respectively sent to the SM processing device 210 for processing the EMS of Category I, the SM processing device 211 for processing the EMS of Category II, and the SM processing device 212 for processing the MMS.

Step S24: sending the SM processed by the SM processing devices 210, 211 and 212 to corresponding receiving terminal of the processed SM through the transport network 10. The receiving terminal of the processed SM may be not necessarily the terminal D of the SM sent by the sender, instead, the SM processing devices 210, 211 and 212 process the SM according to the category of the extended SMS and determine a receiving terminal of the processed SM (e.g., for an SM forwarding service, the receiving terminal of the processed SM may be a third party terminal C different from the terminal B and the terminal D). In addition, the SM routing method in this embodiment also may not include step S24, i.e., the SM processing devices 210, 211 and 212 directly send the processed SM to corresponding receiving terminal of the processed SM through the transport network 10.

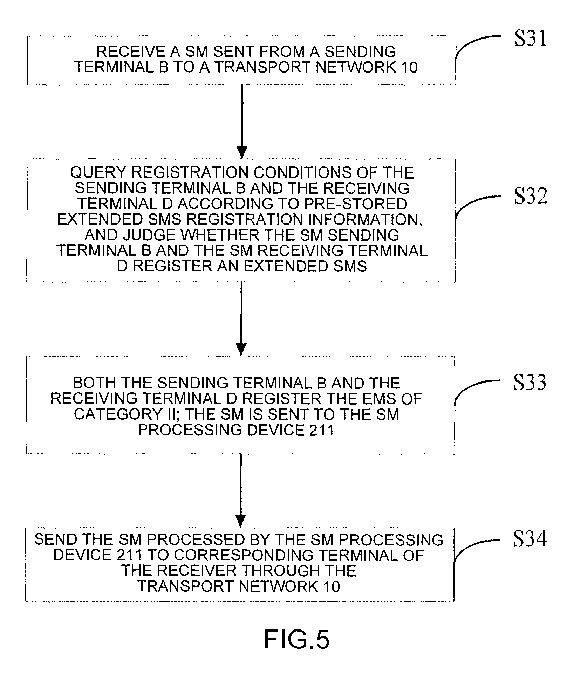

Fig. 5 is a flowchart of an SM routing method according to another embodiment of the present invention. In this embodiment, a transport network 10 receives an SM sent from a terminal B to a terminal D, thus the SM sending terminal is the terminal B, and the SM receiving terminal is the terminal D.

The embodiment judges whether the SM sending terminal and the SM receiving terminal register an extended SMS, and sends the SM according to the extended SMS commonly registered by the SM sending terminal and the SM receiving terminal.

Step S31: receiving an SM sent from a terminal B to a transport network 10.

Step S32: querying registration conditions of the terminal B and the terminal D according to pre-stored extended SMS registration information, and judging whether the terminal B and the terminal D register an extended SMS. In the embodiment, it can be seen that, by querying the extended SMS registration information of the terminals in Table 1, the terminal B registers the extended SMS, i.e., the EMS of Category I and the EMS of Category II, and the terminal D registers the extended SMS, i.e., the EMS of Category II and the MMS.

Step S33: Both the terminal B and the terminal D register the EMS of Category II, and then the SM is sent to the SM processing device 211.

Step S34: sending the SM processed by the SM processing device 211 to corresponding receiving terminal of the processed SM through the transport network 10. The SM processing device 211 processes the SM according to the category of the extended SMS and determines a receiving terminal of the processed SM. In addition, the SM routing method in this embodiment also may not include step S34, i.e., the SM processing device 211 directly sends the processed SM to corresponding receiving terminal of the processed SM through the transport network 10.

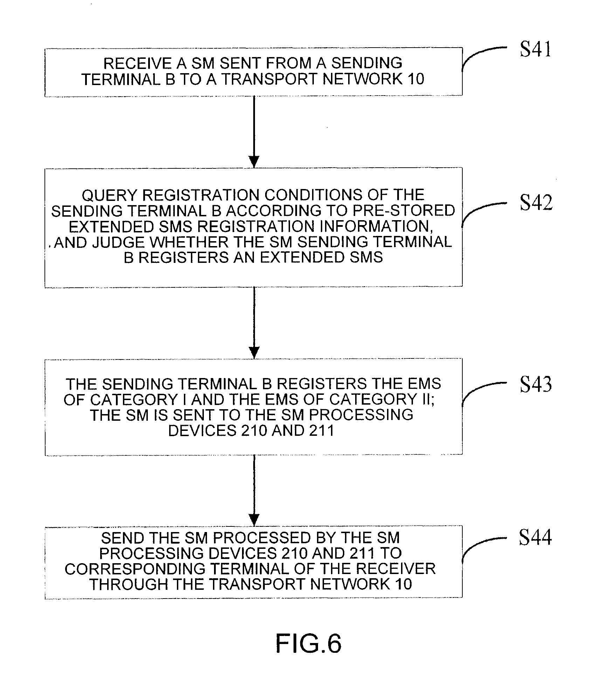

Fig. 6 is a flowchart of an SM routing method according to another embodiment of the present invention. In this embodiment, a transport network 10 receives an SM sent from a terminal B to a terminal D, thus the SM sending terminal is the terminal B, and the SM receiving terminal is the terminal D.

The embodiment judges whether the SM sending terminal registers an extended SMS, and sends the SM according to the extended SMS registered by the sending terminal.

Step S41: receiving an SM sent from a terminal B to a transport network 10.

Step S42: querying registration conditions of the terminal B according to pre-stored extended SMS registration information, and judging whether the terminal B registers an extended SMS. In the embodiment, it can be seen that, by querying the extended SMS registration information of the terminals in Table 1, the terminal B registers the extended SMS, i.e., the EMS of Category I and the EMS of Category II.

Step S43: The terminal B registers the EMS of Category I and the EMS of Category II, and then the SM is sent to the SM processing devices 210 and 211.

Step S44: sending the SM processed by the SM processing devices 210 and 211 to corresponding receiving terminal of the processed SM through the transport network 10. The SM processing devices 210 and 211 process the SM according to the category of the extended SMS and determine a receiving terminal of the processed SM. In addition, the SM routing method in this embodiment also may not include step S44, i.e., the SM processing devices 210 and 211 directly send the processed SM to corresponding receiving terminal of the processed SM through the transport network 10.

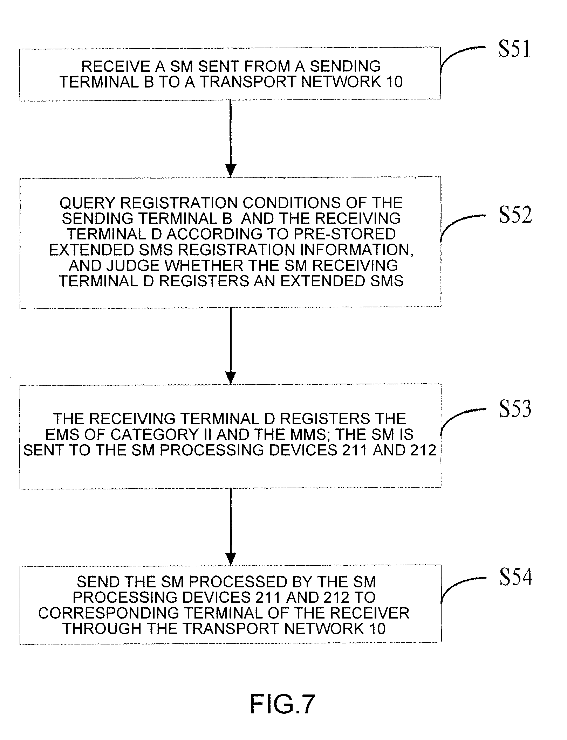

Fig. 7 is a flowchart of an SM routing method according to yet another embodiment of the present invention. In this embodiment, the transport network 10 receives an SM sent from a terminal B to a terminal D, thus the SM sending terminal of is the terminal B, and the SM receiving terminal is the terminal D.

The embodiment judges whether the SM receiving terminal registers an extended SMS, and sends the SM according to the extended SMS registered by the SM receiving terminal.

Step S51: receiving an SM sent from a terminal B to a transport network 10.

Step S52: querying registration conditions of the terminal B and the terminal D according to pre-stored extended SMS registration information, and judging whether the terminal D registers an extended SMS. In the embodiment, it can be seen that, by querying the extended SMS registration information of the terminals in Table 1, the terminal D registers the extended SMS, i.e., the EMS of Category II and the MMS.

Step S53: The terminal D registers the EMS of Category II and the MMS, and then the SM is sent to the SM processing devices 211 and 212.

Step S54: sending the SM processed by the SM processing devices 211 and 212 to corresponding receiving terminal of the processed SM through the transport network 10. The SM processing devices 211 and 212 process the SM according to the category of the extended SMS and determine a receiving terminal of the processed SM. In addition, the SM routing method in this embodiment also may not include step S54, i.e., the SM processing devices 211 and 212 directly send the processed SM to corresponding receiving terminal of the processed SM through the transport network 10.

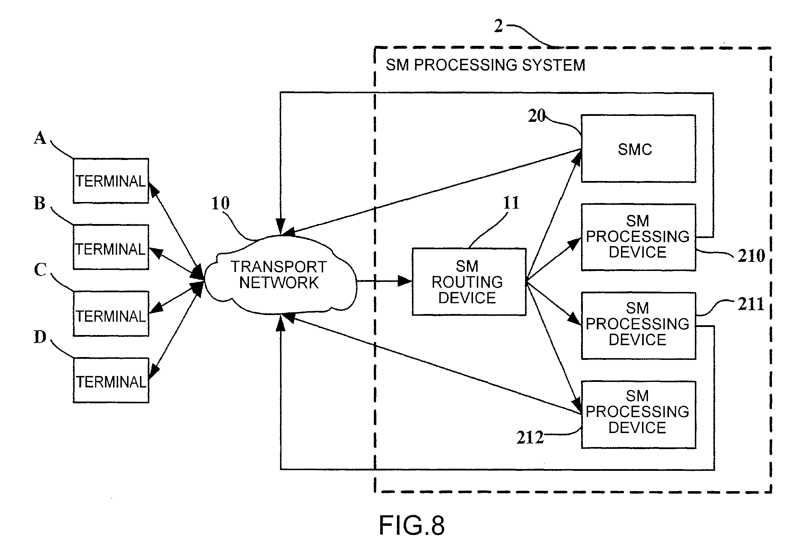

Fig. 8 is a schematic structure diagram of an SM processing system connected to a transport network according to another embodiment of the present invention. The embodiment differs from the SM processing system of Fig. 1 in that the SM processing system 2 is connected to the transport network in a different way. In Fig. 1, the SM processing system and the transport network 10 are in a bidirectional connection, and the SM routing device 11 in the SM processing system 2 is in bidirectional connections with the SMC 20 and the SM processing devices 210, 211 and 212. In this embodiment, the SM processing system 2 and the transport network 10 are in a unidirectional connection, the SM routing device 11 in the SM processing system 2 is in unidirectional connections with the SMC 20 and the SM processing devices 210, 211 and 212, and the SMC 20 and the SM processing devices 210, 211 and 212 are in unidirectional connections with the transport network 10.

In addition, it shall be noted that, if the SM routing device 11 judges whether the terminals A, B, C and D of the sender and/or receiver of the SM register an extended SMS by querying the extended SMS registration information of the terminal stored in the SM processing devices 210, 211 and 212, then the SM routing device 11 in Fig. 2B is in bidirectional connections with the SM processing devices 210, 211 and 212.

A person skilled in the art will understand that all or partial modules or steps in the above embodiments can be implemented by instructing related hardware with programs that can be stored in a computer-readable storage medium such as ROM/RAM, magnetic disk, optical disk, etc. Alternatively, they can be implemented into integrated circuit modules respectively, or multiple modules and steps of them can be implemented into a singular integrated circuit module. Thus, the present invention is not limited by a combination of any specific software and hardware.

In conclusion, the embodiments of the present invention separate the SMC and the SM processing device that process different SMS from each other, and add an SM routing device between the terminal and the SMC as well as between the terminal and the SM processing device. The SM routing device selects corresponding processing path for an SM passing the routing device, according to the SMS registered by the SM sending terminal and the SM receiving terminal, so as to process the basic SMS and the extended SMS separately. As compared with the prior art, the above technical solution has the following advantages:

As the SM routing device is added and the basic SMS and the extended SMS are separately processed, when a service provider provides a newly developed SMS to the network operator, the network operator does not need to make any change or update of the SMC in the existing network; instead, the network operator only needs to overlap the SM processing device for the SMS onto the existing network directly, and add a selection of SM processing path of the SMS in the SM routing device, thus the implementation of the current SMS (e.g., the basic SMS processed by the SMC, and the extended SMS processed by the existing SM processing device) of the existing network will not be influenced. Therefore the above technical solution can conveniently carry out a smooth update when extending new SMS.

As the SM routing device is added and the basic SMS and the extended SMS are processed separately, when a service provider adds a new function to the developed SMS by again providing an updated SM processing device of the SMS to the network operator, the network operator only needs to update the SM processing device of the SMS, without making any change or update of the SM routing device, SMC or other SM processing device, thus the conduction of the current SMS of the existing network will not be influenced. Therefore, the above technical solution can conveniently carry out a smooth update when extending new functions of the SMS.

As the above technical solution does not need to change the SMC processing the basic SMS during the SMS extension, and can conveniently carry out a smooth update, the technical difficulty for updating the SMC and the update cost will not be increased, the SMC components will be prevented from being more and more complex due to the continuous update of the SMC, the costs for updating and maintenance will be prevented from being higher and higher, the stability and reliability of the device will be prevented from being poorer and poorer, etc.

Furthermore, the above technical solution also has the following advantages:

The SM routing device can select multiple processing paths according to the SMS registered by the SM sending terminal and the SM receiving terminal, that is to say, transfer the same SM to multiple SM processing devices.

The SM processing device for new extended SMS can be overlapped onto the existing network directly and conveniently, thus different extended SMS are processed by different SM processing devices, and then it is easy to integrate different SMS provided by multiple service providers in a same network.

When a new function should be added to the SMS having been carried out in the existing network, only the SM processing device of the SMS needs to be updated, and then it is easy to carry out an assembly of the SM functional entities and a capacity expansion of the SM processing device.

Although the present invention is disclosed in the preferred embodiments as above, the present invention is not limited thereby. A person skilled in the art can make possible changes and modifications without deviating from the spirit and scope of the present invention, and the protection scope of the present invention shall be subject to the scope defined by the accompanied claims.

## Claims

1. A short message routing device, **characterized in** comprising:
a receiving unit configured to receive a short message (SM) sent by an SM sending terminal;
a judging unit configured to judge at least one of: whether the SM sending terminal registers an extended short message service (SMS) according to SMS registration information of the SM sending terminal, and whether an SM receiving terminal registers the extended SMS according to SMS registration information of the SM receiving terminal; and
a routing unit configured to, according to a result of judgment by the judging unit, send the SM of a basic SMS to an short message center (SMC) and send the SM of the extended SMS to corresponding SM processing device for processing the extended SMS.

2. The SM routing device according to claim 1, **characterized in** further comprising a transmission unit for transmitting the SM processed by the SMC or the SM processing device to corresponding receiver.

3. The SM routing device according to claim 1, **characterized in** further comprising a storage unit for storing extended SMS registration information of the terminal.

4. An SM routing method, comprising:
receiving an SM sent by an SM sending terminal;
judging at least one of: whether the SM sending terminal registers an extended SMS according to SMS registration information of the SM sending terminal, and whether an SM receiving terminal registers the extended SMS according to SMS registration information of the SM receiving terminal;
sending the SM to an SMC, if the SM sending terminal and/or the SM receiving terminal do not register an extended SMS; and
sending the SM to corresponding SM processing device for processing the extended SMS, if the SM sending terminal and/or the SM receiving terminal registers one or more extended SMSs.

5. The SM routing method according to claim 4, **characterized in that**, further comprising transmitting the SM processed by the SMC or the SM processing device to corresponding receiver.

6. The SM routing method according to claim 4, **characterized in that,** the judging process comprises: querying the extended SMS registration information pre-stored in an SM routing device, and judging whether the at least one of SM sending terminal and the SM receiving terminal registers an extended SMS.

7. The SM routing method according to claim 4, **characterized in that**, the judging process comprises: querying the extended SMS registration information pre-stored in an SM processing device, and judging whether the at least one of SM sending terminal and the SM receiving terminal registers an extended SMS.

8. The SM routing method according to claim 4, **characterized in that,** sending the SM to corresponding SM processing device for processing the extended SMS comprises:
sending the SM to an SM processing device for processing extended SMS respectively registered by the SM sending terminal and the SM receiving terminal; or
sending the SM to an SM processing device for processing an extended SMS commonly registered by the SM sending terminal and the SM receiving terminal.

9. An SM processing system, **characterized in** comprising:
an SMC configured to process an SM in a basic SMS, and sending the processed SM to corresponding receiver;
at least one SM processing device configured to process an SM in an extended SMS, and sending the processed SM to corresponding receiver;
an SM routing device configured to receive an SM sent by a sender, query registration conditions of at least one of the SM sending terminal and the SM receiving terminal; judge at least one of: whether the SM sending terminal registers an extended SMS, and whether an SM receiving terminal registers the extended SMS; send the SM of the extended SMS not having been registered to the SMC, and send the SM of the extended SMS having been registered to corresponding SM processing device for processing the extended SMS.

10. The SM processing system according to claim 9, **characterized in that**, the SMC or the SM processing device sends the processed SM to corresponding receiver through the SM routing device.

11. The SM processing system according to claim 9, **characterized in that**, the SMC or the SM processing device directly sends the processed SM to corresponding receiver.

12. The SM processing system according to claim 9, **characterized in that**, the SM routing device judges whether at least one of SM sending terminal and the SM receiving terminal registers an extended SMS by querying the extended SMS registration information of the terminal stored in the SM routing device.

13. The SM processing system according to claim 9, **characterized in that**, the SM routing device judges whether at least one of SM sending terminal and the SM receiving terminal registers an extended SMS by querying the extended SMS registration information of the terminal stored in the SM processing device.

14. The SM processing system according to claim 9, **characterized in that**, the SM routing device sending the SM of the extended SMS having been registered to corresponding SM processing device for processing the extended SMS comprises:
sending the SM to an SM processing device for processing extended SMS respectively registered by the terminals of the sender and the receiver; or
sending the SM to an SM processing device for processing an extended SMS commonly registered by the terminals of the sender and the receiver.
